# EUROPÄISCHE PATENTSCHRIFT

(11) **EP 0 647 545 B1**
(45) Veröffentlichungstag und Bekanntmachung des Hinweises auf die Patenterteilung: **28.05.1997**
(21) Anmeldenummer: 94115575.6
(22) Anmeldetag: 04.10.1994
(51) Int. Cl.: B60R 9/045

(54) **Querträger für Dachlasten an einem mit einer Dachreling ausgestatteten Kraftwagen**
Cross-bar for roof loads on a motor car provided with roof rails
Barre transversale pour chargement de toit sur une voiture automobile équipée de rails de toit

(30) Priorität: 08.10.1993 DE 4334331
(43) Veröffentlichungstag der Anmeldung: 12.04.1995
(73) Patentinhaber: Happich Fahrzeug-Dachsysteme GmbH, D-42285 Wuppertal (DE)
(72) Erfinder: Brunner, Harald, D-42659 Solingen (DE)

(56) Entgegenhaltungen:
- DE-A- 2 804 588
- DE-A- 3 510 805

## Beschreibung

Die Erfindung bezieht sich auf einen Querträger für Dachlasten an einem mit einer Dachreling ausgestatteten Kraftwagen, der sich von einem Relingrohr zum anderen erstreckt und mit je einer lösbaren Spanneinrichtung an jedem Endbereich zur Befestigung an den Relingrohren ausgestattet ist, die jeweils einen Abstützbacken und einen relativ zu diesem bewegbaren Spannbacken mit einem als Bügelteil ausgebildeten, das zugehörige Relingrohr teilweise für eine Halterung des Querträgers beim Befestigen der Spanneinrichtung umfassenden Backenteil aufweist, wobei der Spannbacken schwenkbar gelagert und durch ein manuelles Verschwenken eines um eine waagerecht ausgerichtete Gelenkachse schwenkbaren Schwenkhebels gegen das zugehörige Relingrohr schwenkbar und arretierbar ist und wobei der Spannbacken nach Art eines zweiarmigen, um eine waagerecht ausgerichtete Gelenkachse schwenkbaren Hebels ausgebildet ist, mit einem unteren Hebelarm als Bügelteil.

Ein gattungsgemäßer Querträger ist aus der DE 41 08 05 C1 bekanntgeworden. Bei diesem bekannten Dachgepäckträger sind als Befestigungsmittel Abstützbacken und Spannbacken vorgesehen. Dabei sind die Abstützbacken zur Fahrzeugmitte hin liegend am Querträger fixiert angeordnet, während die Spannbacken zur Fahrzeugaußenseite hin liegen und jeweils über einen Spannschraubenbolzen verschiebbar am Querträger sitzen. Durch Anziehen der Spannschraubenbolzen werden die verschiebbaren Spannbacken unter Einschluß der Relingrohre gegen die Abstützbacken gezogen und damit der Querträger mit den Relingrohren verbunden. Es hat sich gezeigt, daß die bei dem bekannten Querträger vorgesehenen Spanneinrichtungen den technischen Anforderungen nicht in ausreichendem Maße gerecht werden. Ein erster Nachteil besteht darin, daß die Backen nicht für beliebig gestaltete Relingrohrquerschnitte einsetzbar sondern dem jeweiligen Relingrohrquerschnitt anzupassen sind. Ein weiterer wesentlicher Nachteil der beim bekannten Querträger eingesetzten Spannvorrichtungen ist darin zu sehen, daß die zu erzielende Klemmkraft für eine unbedingt zuverlässige Festlegung des Querträgers an den Relingrohren nicht immer ausreicht. Dies ist auf das ungünstige Hebelverhältnis der Spannschraubenbolzen zu den wirksamen Backenbereichen an den Relingrohren zurückzuführen, die eine optimale Kraftübertragung nicht zuläßt. Wie Versuche gezeigt haben, wird beim Anziehen der Spannschraubenbolzen, bedingt durch die ungünstigen Hebelverhältnisse, ein relativ großes Biegemoment auf diese ausgeübt. Dadurch wiederum kann es zum Klemmen und Verkanten der verschiebbaren Spannbacken kommen, wodurch letztendlich die in die Spannschraubenbolzen eingegebene Spannkraft nur teilweise als auf die Relingrohre wirkende Klemmkraft ankommt. Schließlich erscheint die Bedienbarkeit der am bekannten Querträger vorgesehenen Spannvorrichtungen äußerst aufwendig.

In der DE-A-3 510 805 ist eine Klemmvorrichtung für Dachträgersysteme, bei denen eine Dachträger-Stütze auf einen Relingkörper setzbar und mittels eines an ihr befestigten Klauenkörpers gegen den Relingkörper preßbar ist, gezeigt und beschrieben. Die Klemmvorrichtung soll gegenüber einem Verstellmechanismus in Form einer Klemmschraube eine schnellere und handhabungsfreundlichere Montage und Demontage des Dachträgersystems ermöglichen, ohne die Tragkraft bzw. Belastbarkeit des Dachträgers dadurch zu beeinträchtigen. Um dies zu erreichen, ist bei der Klemmvorrichtung nach der DE-A-3 510 805 vorgesehen, daß der Klauenkörper als verschwenkbar in der Dachträger-Stütze gelagerte Klemmspange ausgebildet ist, die unter eleastischer Verformung und nach Durchwandern eines Verformungs-Maximums in ihre Verriegelungslage bringbar ist, in der sie ein weiteres in der Dachträger-Stütze um einen anderen Drehpunkt verschwenkbares Klauenelement, das den Relingkörper von der der Dachträger-Stütze abgewandten Seite umgreift, gegen den Relingkörper spannt. Bei der in Rede stehenden Klemmvorrichtung soll aber die Klemmkraft der Klemmvorrichtung am Relingkörper allein durch die elastische Ausbildung und Verformbarkeit des Klauenkörpers realisiert werden, was auch bei besonderen Abstimmungsmaßnahmen nicht unbedingt zuverlässig erscheint.

Der vorliegenden Erfindung liegt nun ausgehend von einem Querträger der eingangs genannten Art die Aufgabe zugrunde, diesen so zu gestalten, daß zum einen die Verbindung des Querträgers an beliebig gestalteten Profilquerschnitten der Relingrohre möglich wird, daß zum anderen die Spannvorrichtungen eine optimale Kraftübertragung, die für eine zuverlässige Festlegung des Querträgers an den Relingrohren erforderlich ist, gewährleisten und daß schließlich eine einfache, schnell durchführbare Bedienbarkeit der Spannvorrichtungen geschaffen wird.

Zur Lösung dieser Aufgabe ist erfindungsgemäß vorgesehen, daß durch ein Niederdrücken des Schwenkhebels ein damit verdrehfest verbundener Klemmnocken gegen den mit einer Angriffsfläche für den Klemmnocken ausgebildeten oberen Hebelarm des Spannbackens geschwenkt und entlang dieser Angriffsfläche bewegt wird, um dadurch den Spannbacken um die Gelenkachse und den unteren Hebelarm mit seinem Bügelteil gegen das Relingrohr zu schwenken und das Relingrohr zwischen dem Abstützbacken und dem Bügelteil des Spannbackens zu verspannen, wobei der Abstützbacken Anlageflächen für das Relingrohr aufweist, von denen zwei Anlageflächen etwa senkrecht zueinander verlaufen, während eine dritte Anlagefläche die ersten zwei Anlageflächen schräg miteinander verbindet.

Bevorzugt verläuft die Angriffsfläche des oberen Hebelarms des Spannbackens etwa entsprechend dem Schwenkradius des Klemmnockens bogenförmig, jedoch mit einer spiralartigen Steigung.

Durch die erfindungsgemäßen Maßnahmen wird neben einer, die Zuhilfenahme eines Werkzeugs überflüssig machenden Schnellspannbedienbarkeit ein kraftmäßig geschlossenes System gebildet und damit insbesondere erreicht, daß ein Relingrohr stets an drei Punkten eine Abstützung zwischen den Spannelementen erfährt, und zwar unabhängig vom Relingrohrquerschnitt.

In bevorzugter Ausgestaltung der Erfindung ist eine Übertragungslasche vorgesehen, die beweglich auf der Gelenkachse des Schwenkhebels angeordnet ist und ihrerseits den Spannbacken trägt, wobei die Schwenklage der Übertragungslasche durch ein Einstellorgan bestimmbar und arretierbar ist. Hierdurch kann schnell und einfach eine Grundpositionseinstellung zur Anpassung an kleine oder große Relingprofile, also eine Verkleinerung oder Vergrößerung der Spannöffnung vorgenommen werden.

Das Einstellorgan kann eine an der Übertragungslasche befestigte Gewindemutter und eine darin verschiebbar geführte, am Grundkörper abgestützte Zylinderschraube umfassen. Um auch hier ohne die Zuhilfenehme eines Werkzeugs auskommen zu können, ist weiterhin vorgesehen, daß ein griffgünstig am Querträger angeordneter Einstellknopf mit der Zylinderschraube auf Mitnahme gekuppelt ist.

Ein ungewolltes oder unerlaubtes Bedienen des Schwenkhebels wird dadurch vermieden, daß der Schwenkhebel mit einem einen Schließriegel aufweisenden Zylinderschloß ausgerüstet ist.

Ein Ausführungsbeispiel der Erfindung wird im folgenden anhand der Zeichnung näher erläutert, und es zeigen:
- Fig. 1: eine auf einem Fahrzeugdach angeordnete Dachreling mit Querträgern,
- Fig. 2: einen Endbereich eines Querträgers mit daran angeordneter Spanneinrichtung in Offenstellung,
- Fig. 3: einen Endbereich eines Querträgers mit daran angeordneter Spanneinrichtung in einer Zwischenstellung,
- Fig. 4: einen Endbereich eines Querträgers mit daran angeordneter Spanneinrichtung in Schließstellung,
- Fig. 5: einen Schnitt etwa folgend der Linie V-V nach Fig. 4 und
- Fig. 6: den Querträger mit Spanneinrichtung nach Fig. 4 an einem Relingrohr mit kleinerem Profilquerschnitt angeordnet.

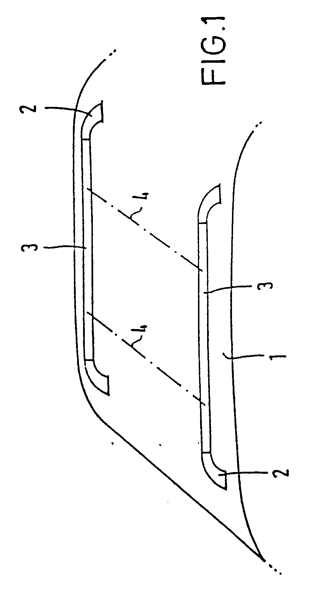

Fig. 1 läßt das Dachblech 1 eines nicht näher dargestellten Fahrzeugs mit einem darauf angeordneten Dachlastenträger erkennen. Der Dachlastenträger wird aus zwei Relings, bestehend aus Stützfüßen 2 und Relingrohren 3 sowie aus lediglich strichpunktiert angedeuteten Querträgern 4, die an den Relingrohren 3 befestigt sind, gebildet. Die Relings erstrecken sich zumindest annähernd parallel zueinander und verlaufen in Fahrzeuglängsrichtung.

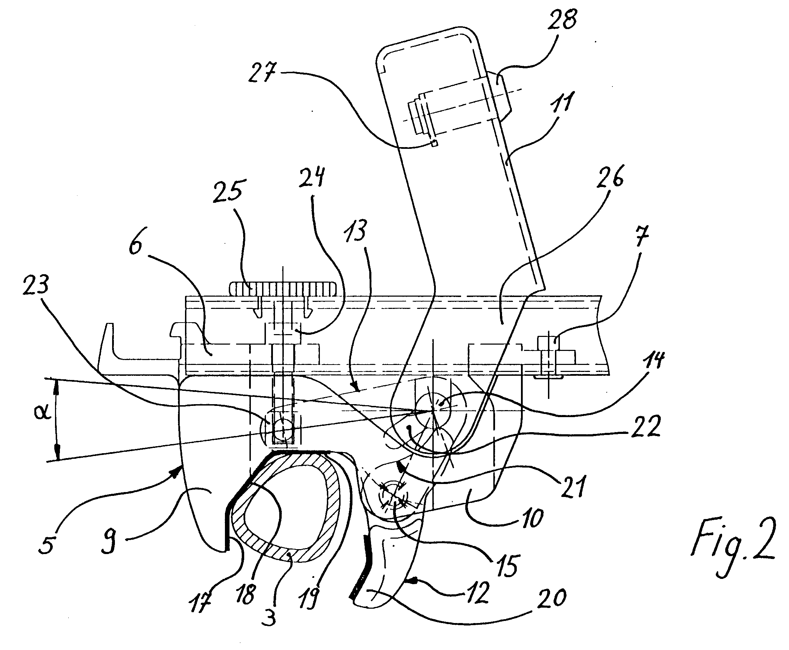

Die Befestigungsanordnung der Querträger 4 an den Relingrohren 3 und die Ausbildung der Spanneinrichtung wird nun anhand der Fig. 2 bis 6 erläutert.

Die an jedem Endbereich eines jeden Querträgers 4 angeordnete Spanneinrichtung umfaßt zunächst einen Grundkörper 5, der in geeigneter Weise am Querträger 4 befestigt ist. Im Ausführungsbeispiel ist der Grundkörper 5 mit einem oberen Körperteil 6 in den Endbereich des als Vierkantrohr ausgebildeten Querträgers 4 eingeschoben und am Querträger 4 durch einen Halteniet 7 festgelegt. Das Einschieben des Grundkörpers 5 wird durch seitliche Nuten zwischen dem oberen und unteren Grundkörperbereich und einen Längsschlitz 8 in der unteren Wandung des Querträgers 4 ermöglicht.

Der Grundkörper 5 ist einstückig mit einem Abstützbacken 9 ausgebildet und weiterhin durch eine ihn von oben nach unten durchsetzende Ausnehmung 10 gehäuseartig gestaltet. In die Ausnehmung 10 des Grundkörpers 5 greifen ein Spannbacken 12 und eine Übertragungslasche 13 ein. Auf einer ersten, die Gehäusewandungen des Grundkörpers 5 durchsetzenden Gelenkachse 14 sind ein Schwenkhebel 11 und die Übertragungslasche 13 gelagert, wobei zwischen dem Schwenkhebel 11 und der Gelenkachse 14 eine drehfeste und zwischen der Übertragungslasche 13 und der Gelenkachse 14 eine drehbewegliche Anordnung vorgesehen ist. Auf einer zweiten Gelenkachse 15, die unterhalb der Gelenkachse 14 angeordnet und dem Abstützbacken 9 näher benachbart ist, ist der Spannbacken 12 schwenkbeweglich gelagert. Diese parallel zur Gelenkachse 14 ausgerichtete zweite Gelenkachse 15 durchsetzt die Übertragungslasche 13, zwischen deren parallelen Laschenteilen 16 ein Teilbereich des Spannbackens 12 geführt ist.

Der Abstützbacken 9 weist Anlageflächen 17, 18 und 19 auf, von denen die Anlagenflächen 17 und 19 etwa senkrecht zueinander verlaufen, während die Anlagefläche 18 eine schräge Verbindung zwischen diesen Anlageflächen herstellt. An jeweils zumindest zwei der Anlageflächen 17 bis 19 kommt jeweils ein Relingrohr 3 in abgestützter Anlage.

Der Spannbacken 12 ist nach Art eines zweiarmigen, um die waagerechte Gelenkachse 15 schwenkbaren Hebels ausgebildet mit einem unteren Hebelarm als Bügelteil 20 und einem oberen Hebelarm, der eine Angriffsfläche 21 für einen mit dem Schwenkhebel 11 verdrehfest verbundenen Klemmnocken 22, der längs dieser Angriffsfläche 21 bei der Schwenkhebelbetätigung entlangzugleiten vermag, aufweist. Die Angriffsfläche 21 ist etwa dem Schwenkradius des Klemmnockens 22 entsprechend bogenförmig, jedoch mit einer spiralartigen Steigung gestaltet. Im Ausführungsbeispiel ist der Klemmnocken 22 einstückiger Bestandteil der Gelenkachse 14. Der Spannbacken 12 ist mit seiner dem Abstützbacken 9 zugewandten Seite an ein Relingrohr 3 anlegbar und durch eine Schwenkbetätigung des Schwenkhebels 11 gegen das Relingrohr 3 verspannbar.

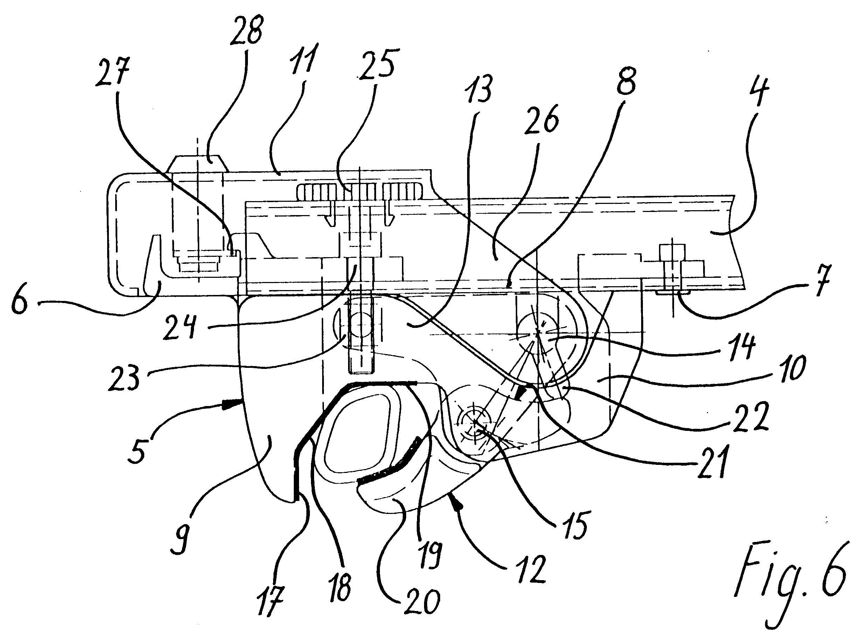

Die Übertragungslasche 13 ist vorgesehen zur Anpassung der Spanneinrichtung an unterschiedliche Relingrohre. Daher ist die Übertragungslasche auch schwenkbeweglich gelagert und trägt ihrerseits den Spannbacken 12. Die jeweilige Schwenklage der Übertragungslasche 13 ist über ein Einstellorgan bestimmbar, das eine an der Übertragungslasche 13 befestigte Gewindemutter 23 und eine darin längsverschiebbar geführte Zylinderschraube 24 umfaßt. Der sich für die Übertragungslasche 13 ergebende Schwenkwinkel ist in Fig. 2 angedeutet und mit α bezeichnet. Im übrigen zeigt z.B. Fig. 2 einen Schwenkwinkel der Übertragungslasche 13 für ein dickes Relingrohr 3 und Fig. 6 einen Schwenkwinkel der Übertragungslasche für ein dünnes Relingrohr 3. Um das Einstellen der jeweiligen Grundposition zu erleichtern, ist die Zylinderschraube 24 mit einem Einstellknopf 25 gekuppelt, der von der Querträgeroberseite her leicht zugänglich ist.

Der Abstückbacken 9 ist zur Fahrzeugaußenseite hin liegend am Querträger 4 fixiert angeordnet, während der Spannbacken 12 zur Fahrzeugmitte hin liegt.

Der Schwenkhebel 11 weist einen gabelförmigen Endbereich mit Gabelarmen 26 auf, die zum einen den Querträger 4 und zum anderen den Grundkörper 5, an dem sie über die Gelenkachse 14 festgelegt sind, umgreifen.

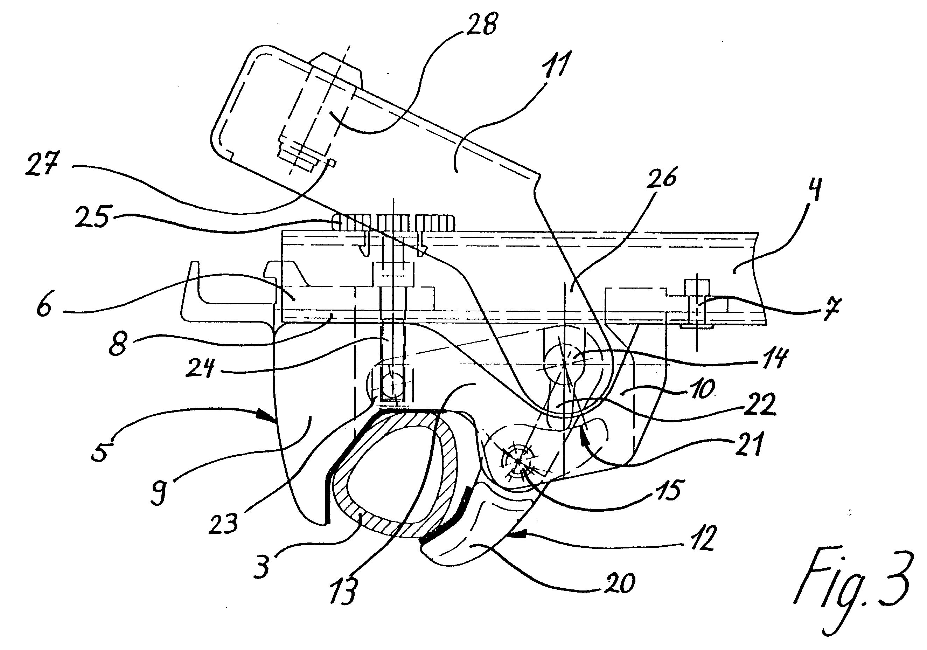

Zur Montage wird der Querträger 4 mit den an seinen Endbereichen sitzenden Spanneinrichtungen auf die beiden parallel zueinander verlaufenden Relingrohre 3 einer Dachreling aufgesetzt. Durch ein Schwenken bzw. Niederdrücken des Schwenkhebels 11 fährt der Klemmnocken 22 gegen die Angriffsfläche 21 des Spannbackens 12, womit dieser an das zugehörige Relingrohr 3 herangeschwehkt wird, zunächst bis in eine vorgespannte Position nach Fig. 3. In dieser vorgespannten Position kann die richtige Lage der Querträger 4, die ja in beliebiger Stellung längs der Relingrohre 3 anordbar sein sollen, überprüft werden. Durch vollständiges Niederdrücken des Schwenkhebels 11 läßt sich dann die endgültige Festlegung des Querträgers 4 an den Relingrohren 3 bewerkstelligen, wobei der Klemmnocken 22 eine Steigung der Angriffsfläche 21 zu überwinden hat. Der Klemmnocken 22 überschreitet bei der Schwenkbewegung die Totpunktlinie zwischen den Gelenkachsen 14 und 15, so daß ein selbständiges Lösen der Spanneinrichtung nicht zu befürchten ist. Zudem wird der Schwenkhebel 11 am Grundkörper 5 durch den Schließriegel 27 eines Zylinderschloßes 28, das am Schwenkhebel 11 angeordnet ist, festgelegt. Diese Maßnahme dient auch dem Diebstahlschutz.

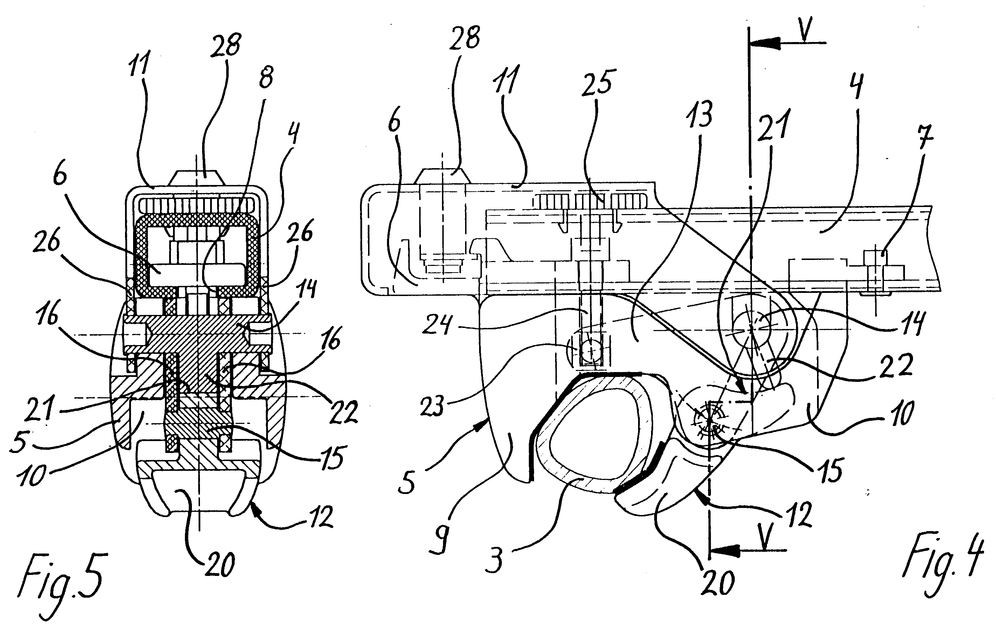

Die Spannöffnung zwischen dem Abstützbacken 9 und dem Spannbacken 12 ist zwecks Anpassung an unterschiedliche Dicken von Relingrohren 3 (Fig. 2 und 4 zeigen ein relativ dickes und Fig. 6 ein relativ dünnes Relingrohr 3) veränderbar. Hierzu dienen die verschwenkbare Anordnung der Übertragungslasche 13 und die Verstellglieder, bestehend aus Gewindemutter 23, Zylinderschraube 24 und ggf. Einstellknopf 25. Der Verstellbereich erstreckt sich über den Schwenkwinkel α nach Fig. 2.

## Patentansprüche

1. Querträger (4) für Dachlasten an einem mit einer Dachreling ausgestatteten Kraftwagen, der sich von einem Relingrohr (3) zum anderen erstreckt und mit je einer lösbaren Spanneinrichtung an jedem Endbereich zur Befestigung an den Relingrohren (3) ausgestattet ist, die jeweils einen Abstützbacken (9) und einen relativ zu diesem bewegbaren Spannbacken (12) mit einem als Bügelteil (20) ausgebildeten, das zugehörige Reglingrohr (3) teilweise für eine Halterung des Querträgers (4) beim Befestigen der Spanneinrichtung umfassenden Backenteil aufweist, wobei der Spannbacken (12) schwenkbar gelagert und durch ein manuelles Verschwenken eines um eine waagerecht ausgerichtete Gelenkachse (14) schwenkbaren Schwenkhebels (11) gegen das zugehörige Relingrohr (3) schwenkbar und arretierbar ist und wobei der Spannbacken (12) nach Art eines zweiarmigen, um eine waagerecht ausgerichtete Gelenkachse (15) schwenkbaren Hebels ausgebildet ist, mit einem unteren Hebelarm als Bügelteil (20), dadurch gekennzeichnet, daß durch ein Niederdrücken des Schwenkhebels (11) ein damit verdrehfest verbundener Klemmnocken (22) gegen den mit einer Angriffsfläche (21) für den Klemmnocken (22) ausgebildeten oberen Hebelarm des Spannbackens (12) geschwenkt und entlang dieser Angriffsfläche bewegt wird, um dadurch den Spannbacken (12) um die Gelenkachse (15) und den unteren Hebelarm mit seinem Bügelteil (20) gegen das Relingrohr (3) zu schwenken und das Relingrohr (3) zwischen dem Abstützbacken (9) und dem Bügelteil (20) des Spannbackens (12) zu verspannen, wobei der Abstützbacken (9) Anlageflächen (17, 18, 19) für das Relingrohr (3) aufweist, von denen zwei Anlageflächen (17, 19) etwa senkrecht zueinander verlaufen, während eine dritte Anlagefläche (18) die ersten zwei Anlageflächen (17, 19) schräg miteinander verbindet.

2. Querträger nach Anspruch 1, dadurch gekennzeichnet, daß die Angriffsfläche (21) des oberen Hebelarms des Spannbackens (12) etwa entsprechend dem Schwenkradius des Klemmnockens (22) bogenförmig verläuft, jedoch mit einer spiralartigen Steigung.

3. Querträger nach Anspruch 1 oder 2, dadurch gekennzeichnet, daß eine Übertragungslasche (13) vorgesehen ist, die beweglich auf der Gelenkachse (14) des Schwenkhebels (11) angeordnet ist und ihrerseits den Spannbacken (12) trägt, wobei die Schwenklage der Übertragungslasche (13) durch ein Einstellorgan bestimmbar und arretierbar ist.

4. Querträger nach wenigstens einem der Ansprüche 1 bis 3, dadurch gekennzeichnet, daß das Einstellorgan eine an der Übertragungslasche (13) befestigte Gewindemutter (23) und eine darin verschiebbar geführte, am Grundkörper (5) abgestützte Zylinderschraube (25) umfaßt.

5. Querträger nach wenigstens einem der Ansprüche 1 bis 4, dadurch gekennzeichnet, daß ein griffgünstig am Querträger (4) angeordneter Einstellknopf (25) mit der Zylinderschraube (24) auf Mitnahme gekuppelt ist.

6. Querträger nach wenigstens einem der Ansprüche 1 bis 5, dadurch gekennzeichnet, daß der Schwenkhebel (11) mit einem einen Schließriegel (27) aufweisenden Zylinderschloß (28) ausgerüstet ist.

## Claims

1. Cross-member (4) for roof loads on a motor vehicle equipped with roof rails, the cross-member extending from one rail tube (3) to the other and being equipped with a respective releasable clamping device at each end region for the fastening on the rail tubes (3), the clamping device in each case having a supporting jaw (9) and a clamping jaw (12) which is movable relative to the latter and has a jaw part which is designed as a curved part (20) and partially surrounds the relevant rail tube (3) so as to hold the cross-member (4) when the clamping device is being fastened, the clamping jaw (12) being mounted pivotably and by manual pivoting of a pivoted lever (11), pivotable around a horizontally directed pivot pin (14), can be pivoted against the relevant rail tube (3) and locked, and the clamping jaw (12) being designed in the manner of a two-armed lever, pivotable around a horizontally directed pivot pin (15), with a lower lever arm as curved part (20), characterized in that by pressing down the pivoted lever (11) a clamping cam (22) connected thereto in a rotationally fixed manner is pivoted against the upper lever arm of the clamping jaw (12), which upper lever arm is designed with an engagement surface (21) for the clamping cam (22), and is moved along this engagement surface in order thereby to pivot the clamping jaw (12) around the pivot pin (15) and the lower lever arm with its curved part (20) against the rail tube (3) and to clamp the rail tube (3) between the supporting jaw (9) and the curved part (20) of the clamping jaw (12), the supporting jaw (9) having bearing surfaces (17, 18, 19) for the rail tube (3), two bearing surfaces (17, 19) of which run approximately perpendicularly with respect to one another, whereas a third bearing surface (18) connects the first two bearing surfaces (17, 19) obliquely to one another.

2. Cross-member according to Claim 1, characterized in that the engagement surface (21) of the upper lever arm of the clamping jaw (12) runs in an arcuate manner, approximately corresponding to the pivot radius of the clamping cam (22), but with a spiral-like gradient.

3. Cross-member according to Claim 1 or 2, characterized in that a transfer link (13) is provided which is arranged movably on the pivot pin (14) of the pivoted lever (11) and bears the clamping jaw (12), the pivot position of the transfer link (13) being able to be determined and locked by an adjusting member.

4. Cross-member according to at least one of Claims 1 to 3, characterized in that the adjusting member comprises a threaded nut (23), which is fastened on the transfer link (13), and a cheese-head screw (25) which is guided displaceably within said nut and is supported on the main body (5).

5. Cross-member according to at least one of Claims 1 to 4, characterized in that an adjusting knob (25), which is arranged on the cross-member (4) in a manner which is favourable with gripping, is coupled to the cheese-head screw (24) in order to drive it along.

6. Cross-member according to at least one of Claims 1 to 5, characterized in that the pivoted lever (11) is equipped with a cylinder lock (28) having a locking bolt (27).

## Revendications

1. Traverse (4) pour des charges de toit sur un véhicule équipé d'une galerie, qui s'étend d'un tube (3) de la galerie à l'autre et qui est équipée à chacune de ses extrémités d'un dispositif de serrage amovible pour la fixation aux tubes (3) de la galerie, qui présente une mâchoire d'appui (9) et une mâchoire de serrage (12) mobile par rapport à cette dernière, avec un élément de mâchoire en forme d'étrier (20) entourant partiellement le tube correspondant (3) de la galerie pour maintenir la traverse (4) lors de la fixation du dispositif de serrage, dans laquelle la mâchoire de serrage (12) est pivotante et peut pivoter et être arrêtée contre le tube correspondant (3) de la galerie par un pivotement manuel d'un levier (11) pivotant autour d'un axe de pivotement (14) orienté à l'horizontale et dans laquelle la mâchoire de serrage (12) est configurée à la manière d'un levier à deux bras pivotant autour d'un axe de pivotement (15) orienté à l'horizontale, avec un bras inférieur du levier constituant l'étrier (20), caractérisée en ce que, par un abaissement du levier pivotant (11), une came de serrage (22) fixement calée sur celui-ci pivote contre le bras supérieur du levier de la mâchoire de serrage (12) configuré avec une surface d'appui (21) pour la came de serrage (22) et se déplace le long de cette surface d'appui, afin de faire pivoter ainsi la mâchoire de serrage (12) autour de l'axe de pivotement (15) et le bras inférieur du levier avec son étrier (20) contre le tube (3) de la galerie et de serrer le tube (3) de la galerie entre la mâchoire d'appui (9) et l'étrier (20) de la mâchoire de serrage (12), la mâchoire d'appui (9) présentant des surfaces de support (17, 18, 19) pour le tube (3) de la galerie, dont deux surfaces de support (17, 19) sont sensiblement perpendiculaires l'une à l'autre, tandis qu'une troisième surface de support (18) relie obliquement l'une à l'autre les deux premières surfaces de support (17, 19).

2. Traverse suivant la revendication 1, caractérisée en ce que la surface d'appui (21) du bras supérieur du levier de la mâchoire de serrage (12) est incurvée d'une façon qui correspond sensiblement au rayon de pivotement de la came de serrage (22), mais cependant avec un pas en spirale.

3. Traverse suivant la revendication 1 ou 2, caractérisée en ce qu'il est prévu un plateau de transmission (13), qui est monté de façon mobile sur l'axe de pivotement (14) du levier pivotant (11) et qui porte à son tour la mâchoire de serrage (12), la position de pivotement du plateau de transmission (13) pouvant être déterminée et arrêtée par un organe de réglage.

4. Traverse suivant au moins l'une des revendications 1 à 3, caractérisée en ce que l'organe de réglage comprend un écrou fileté (23) fixé au plateau de transmission (13) et une vis cylindrique (24) pouvant glisser dans celui-ci et supportée dans le corps de base (5).

5. Traverse suivant au moins l'une des revendications 1 à 4, caractérisée en ce qu'un bouton de réglage (25) disposé de façon accessible sur la traverse (4) est couplé avec la vis cylindrique (24) pour l'entraîner.

6. Traverse suivant au moins l'une des revendications 1 à 5, caractérisée en ce que le levier pivotant (11) est équipé d'une serrure à cylindre (28) présentant un verrou de fermeture (27).
